# EUROPÄISCHE PATENTANMELDUNG

(11) **EP 4 841 933 A1**
(43) Veröffentlichungstag der Anmeldung: **18.11.2026**
(21) Anmeldenummer: 26177101.8
(22) Anmeldetag: 07.05.2026
(51) Int. Cl.: H04L 9/32, G06F 21/34, H04L 9/40

(54) **VERFAHREN, VORRICHTUNG UND SYSTEM ZUR AUTHENTIZITÄTSÜBERPRÜFUNG**

(30) Priorität: 13.05.2025 DE 102025001694
(71) Anmelder: Bundesdruckerei GmbH, 10969 Berlin (DE)
(72) Erfinder: Byszio-Wegener, Frank, 10969 Berlin (DE); Morgner, Frank, 10969 Berlin (DE)

(57) **Zusammenfassung**

Die Erfindung betrifft ein Verfahren sowie eine Vorrichtung und System zur Überprüfung einer Signatur. Das Verfahren zur Überprüfung einer externen Signatur umfasst ein Aufbauen einer sicheren Verbindung zu einem ID Token; ein Auslesen von gespeicherten Identitätsdaten aus dem ID Token; ein Erhalten einer Dokumentenkennung des ID Tokens; ein Empfangen eines dem ID Token zugeordneten externen Zertifikats; ein Empfangen einer externen Signatur basierend auf der Dokumentenkennung, wobei die externe Signatur eine unter Verwendung eines dem externen Zertifikat zugeordneten geheimen Schlüssels erstellte kryptographische Signatur von authentischen Identitätsdaten des ID Tokens ist; und ein Überprüfen der Authentizität der gespeicherten Identitätsdaten des ID Tokens basierend auf der externen Signatur und dem externen Zertifikat. Weiterhin ist auch ein Verfahren zum Erstellen einer externen Signatur beschrieben.

## Beschreibung

Die vorliegende Erfindung betrifft ein Verfahren zur Authentizitätsüberprüfung mittels einer kryptographischen Signatur, mit der die Authentizität von Identitätsdaten in einem ID Token abgesichert sein kann. Außerdem betrifft die vorliegende Erfindung eine entsprechende Vorrichtung sowie ein System zur Überprüfung einer Signatur.

Aus dem Stand der Technik ist die Verwendung von Chipkarten und weiterer ID Token zur Identitätsprüfung bekannt. Diese ID Token, wie beispielsweise Reisepässe, Personalausweise oder andere ID-Dokumente haben einen Mikroprozessor und einen integrierten Speicher in dem unter anderem, neben Programminstruktionen, persönliche Daten gespeichert sind, die bei Kontrollen durch ein Lesegerät, welches über die entsprechenden Berechtigungen verfügt, nach erfolgreicher Ausführung einiger Programminstruktionen, ausgelesen werden können, um die Identität des Token-Besitzers zu verifizieren.

Um eine Manipulation der in einem Token gespeicherten persönlichen Daten zu verhindern, können die persönlichen Daten durch verschiedene Mechanismen geschützt werden. Eine Option für den Schutz von Daten vor Manipulation ist die Erstellung einer kryptographischen Signatur über den Daten, wobei die Signatur dann unter Verwendung einer Public Key Infrastruktur überprüft werden kann.

Diese Verfahren, welches auch als "Passive Echtheitsprüfung" bezeichnet wird, wird aktuell Rahmen des Dokuments 9303 der International Civil Aviation Organization (ICAO) zur Überprüfung der Echtheit der gespeicherten Identitätsdaten vorgegeben. Zur Erstellung der Signatur wird im Stand der Technik ein auf Elliptischen-Kurven-Kryptographie (Elliptic Curve Cryptography, ECC) basierender privater Schlüssel verwendet, der gegenüber aktuell verfügbaren Berechnungsverfahren als sicher gilt. Als alternative zu ECC-basierten Schlüsseln werden im Stand der Technik außerdem asymmetrische Verschlüsselungen basierend auf dem RSA Verfahren verwendet, welches auf der Primfaktorzerlegung basiert.

Vor dem Hintergrund der zunehmenden Forschung und Entwicklung im Bereich der Quantencomputer, besteht jedoch das Risiko, dass eine Entschlüsselung des privaten Schlüssels und somit eine Erstellung manipulierter ID Tokens innerhalb der nächsten Jahre möglich werden könnte. Da ID Tokens, insbesondere Reisepässe und andere hoheitliche Dokumente generell eine lange Laufzeit und Gültigkeit haben, besteht somit eine Aufgabe darin, zusätzliche Sicherheitsmechanismen für ID Tokens zu entwickeln, die selbst im Fall eines kryptographisch relevanten Quantencomputers eine Überprüfung der Echtheit, bzw. Manipulationsfreiheit der auf einem ID Token gespeicherten Daten ermöglicht.

Die Aufgabe der vorliegenden Erfindung besteht somit darin, die auf einem ID Token gespeicherten Daten zusätzlich zu den bereits vorhandenen Schutzmechanismen abzusichern.

Diese Aufgabe wird durch das Verfahren und das System gemäß den unabhängigen Ansprüchen gelöst. Bevorzugte Ausführungsformen der Erfindung ergeben sich aus den in den Unteransprüchen genannten Merkmalen und weiterhin auch aus der vorliegenden Offenbarung als Ganzes.

Die Aufgabe wird durch die Gegenstände der unabhängigen Patentansprüche gelöst. Bevorzugte Ausführungsformen der Erfindung ergeben sich aus den in den Unteransprüchen genannten Merkmalen und weiterhin auch aus der vorliegenden Offenbarung als Ganzes.

Ein erster Aspekt der Erfindung betrifft ein Verfahren zur Überprüfung einer Signatur. Das beschriebene Verfahren umfasst die folgenden Schritte:
- Aufbauen einer sicheren Verbindung zu einem ID Token;
- Auslesen von gespeicherten Identitätsdaten aus dem ID Token;
- Erhalten einer Dokumentenkennung des ID Tokens;
- Empfangen eines dem ID Token zugeordneten externen Zertifikats;
- Empfangen einer externen Identitätssignatur basierend auf der Dokumentenkennung, wobei die externe Identitätssignatur eine unter Verwendung eines dem externen Zertifikat zugeordneten geheimen Schlüssels erstellte kryptographische Signatur von authentischen Identitätsdaten des ID Tokens ist; und
- Überprüfen der Authentizität der gespeicherten Identitätsdaten des ID Tokens basierend auf der externen Identitätssignatur und dem externen Zertifikat.

Vor der weiteren Beschreibung der Verfahrensschritte werden zunächst die verwendeten Begriffe definiert und erklärt.

Der Begriff "Token" bezeichnet vorliegend jegliche Realisierung eines tragbaren Mikrocomputers mit einer externen Schnittstelle, einem Mikroprozessor und einem nicht-flüchtigen Speicher, der mittelbar über die externe Schnittstelle einer äußeren Lese- und/oder Schreiboperation zugänglich ist.

Unter einem "Token", welches auch als "ID-Token" bezeichnet wird, wird hier insbesondere ein tragbares elektronisches Gerät verstanden, welches beispielsweise zumindest einen geschützten elektronischen Datenspeicher zur Speicherung von Daten und eine Kommunikations-Schnittstelle zum Auslesen der Daten aufweist. Der Speicherbereich ist beispielsweise geschützt, um zu verhindern, dass das in dem Speicherbereich gespeicherte Daten in unerlaubter Weise verändert oder ohne die dafür erforderliche Berechtigung ausgelesen wird. Mit anderen Worten kann auf den Speicherbereich nur dann zugegriffen werden, wenn eine hierzu erforderliche Zugriffberechtigung gegeben ist.

Der Token kann eine Kommunikationsschnittstelle aufweisen und einen Mikroprozessor, der über einen internen Datenbus mit dem geschützten Speicherbereich verbunden ist. Ein externer Zugriff auf den geschützten Speicherbereich über die Kommunikations-schnittstelle kann nur über den Prozessor erfolgen, nachdem der Prozessor durch Ausführung eines Programms das Vorliegen der entsprechenden Zugriffberechtigung geprüft hat.

Die Kommunikationsschnittstelle ist somit eine Schnittstelle, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist.

Insbesondere kann es sich bei dem Token um einen USB-Stick, eine Chipkarte oder ein anderes Secure Element (SE), wie beispielsweise von Global Platform (www.globalplatform.org) spezifiziert, handeln oder um ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise wie Zugangskarten, in die ein Datenspeicher zur Speicherung von Daten integriert ist. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Der Begriff "externe Schnittstelle" wird hinsichtlich eines Tokens verwendet für jede technische Einrichtung zum Austausch von digital codierten Daten zwischen dem Token und einer davon getrennten Datenverarbeitungseinrichtung. Beispiele für externe Schnittstellen eines Tokens sind die aus den Bank- und Kreditkarten bekannten Kontaktfelder und die aus dem Bereich der elektronischen Ausweisdokumente bekannte RFID-Schnittstellen zur hochfrequenten drahtlosen Signalübertragung.

Eine Verbindung zwischen einem Token und einer Datenverarbeitungsvorrichtung kann durch gegenseitige Authentisierung des Tokens und der Datenverarbeitungsvorrichtung erfolgen. Hierzu kann beispielsweise das Basic Access Control (BAC) Protokoll, das Extended Access Control (EAC) Protokoll oder das Password Authenticated Connection Establishment (PACE) Protokoll verwendet werden. Informationen zu diesen Protokollen werden beispielsweise in der Technischen Richtlinie TR-03110-1 des Bundesamts für Sicherheit in der Informationstechnik offenbart.

Unter "Verwaltungsdaten", die alternativ auch als "Kontrolldaten" bezeichnet werden können, im nicht-flüchtigen Speicher eines Tokens werden im Gegensatz zu Nutzdaten Verwaltungsdaten verstanden, die insbesondere eine Zugriffsbedingung für den Zugriff auf die Nutzdaten festlegen. Ferner können die Verwaltungsdaten auch eine Angabe der Position der betreffenden Datei in dem Dateisystem des Tokens beinhalten, beispielsweise in Form eines Zeigers auf den jeweiligen Nachfolgerknoten in dem Dateibaum des Tokens, sowie z.B. einen Dateibezeichner (engl.: File Identifier, FID) und einen Applikationsbezeichner (engl.: Application Identifier, AID).

Unter "Nutzdaten" werden hier insbesondere solche Daten im nicht-flüchtigen Speicher eines Tokens verstanden, die ein mit dem Token interoperables Anwendungsprogramm eines Terminals benötigt, wie zum Beispiel biometrische Daten, insbesondere Fingerabdruckdaten, Gesichtsbiometriedaten und/oder Irisscandaten, die ein Terminal für eine biometrische Authentifizierung benötigt.

Die auf dem Token gespeicherten Daten (Nutzdaten und Verwaltungsdaten) können in Form einer sogenannten "Datenstruktur" abgespeichert sein. Mit einer "Datenstruktur" sind hierbei strukturiert abgespeicherte Daten gemeint, die beispielsweise in einer Baumstruktur oder in einer Sequenz gespeichert sind.

Unter einer "Datengruppe" wird weiterhin ein Element der Datenstruktur verstanden, welches einen oder mehrere Datenwerte beinhalten kann. Datengruppen können beispielsweise als Datengruppen im Sinne der ICAO Spezifikation 9303 verstanden werden.

Der "Adressbereich" eines nicht-flüchtigen Speichers eines Tokens ist die Menge der Binärbezeichner, nämlich der Adressen, mit denen der Mikroprozessor des Tokens die Einheiten des nicht-flüchtigen Speichers in Zugriffsoperationen auswählt. Typisch werden die Adressen vom Mikroprozessor auf einem Register und/oder über einen Befehlsparameter gebildet. In Token ohne Speicherverwaltungseinheit (Memory Management Unit, MMU) erscheinen die Adressen direkt auf dem Datenbus. Dies ist jedoch nicht vorausgesetzt. Auch im Fall einer Virtualisierung des Speicherzugriffs durch eine Speicherverwaltungseinheit und/oder einer Verwürfelung (engl.: scrambling) der Speicherzugriffe wird vorliegend als Adressbereich die Menge der virtuellen und/oder verwürfelten Adressen verstanden, mit denen ein tatsächlich verfügbares Speicherelement auf der Stufe der Prozessorlogik für einen Zugriffsbefehl auswählbar ist.

Als "Fragment" wird ein maximal-zusammenhängender Adressbereich innerhalb des freien nicht-flüchtigen Speichers bezeichnet. Dabei bedeutet maximal zusammenhängend, dass weder die dem Fragment vorangehende noch die dem Fragment nachfolgende Adresse zum freien nicht-flüchtigen Speicher gehört.

Als "Metadaten" werden Daten im nicht-flüchtigen Speicher eines Tokens bezeichnet, mit denen Einzelheiten zur Speicherung von Nutzdaten beschreiben sind. Deshalb muss für die Speicherverwaltung eine eindeutige Verbindung zwischen Metadaten und den dadurch beschriebenen Nutzdaten herleitbar sein. Eine solche eindeutige Verbindung wird beispielsweise durch eine Datenorganisation verwirklicht, bei der die Metadaten als Header fester oder bestimmbarer Länge im logischen Adressbereich den Nutzdaten vorausgehen.

Als "Datei" wird vorliegend eine selbstbeschreibende strukturierte oder strukturierbare Zusammenstellung von Daten bezeichnet. Der zur Beschreibung der Datei dienende Teil der Daten sind Metadaten. Der darüber hinaus gehende Teil der Daten sind Nutzdaten.

Als "Verweisstruktur" wird eine strukturierte oder strukturierbare Zusammenstellung von Adressen mit Verweisen auf andere Daten bezeichnet.

Als "Zugriffslogik" wird ein abstraktes, programmtechnisch realisierbares Ordnungsschema für den Zugriff auf Daten in einem Speicher verstanden. In diesem Sinne ist eine Verweisstruktur eine besondere Zugriffslogik, nämlich eine in den gespeicherten Daten abgebildete Zugriffslogik. Andere Realisierungen einer Zugriffslogik können prozedural oder objektorientiert sein.

Als "Dateisystem" wird eine zum Zeitpunkt der Herausgabe des Tokens bereits wenigstens im Ansatz angelegte Struktur aus Verwaltungsdaten im nicht-flüchtigen Speicher angesehen. Typische Token sind zum Zeitpunkt der Herausgabe mit programmtechnischen Einrichtungen ausgestattet, die eine Erweiterung oder allgemeine Veränderung des Dateisystems unter Beibehaltung des unterliegenden abstrakten Ordnungsschemas zu späteren Zeitpunkten erlauben. Wiederum typisch werden diese programmtechnischen Einrichtungen als Teile einer hardwarespezifischen programmtechnischen Grundausrüstung bereitgestellt, die auch als Chipkartenbetriebssystem bezeichnet wird. Für weitere Einzelheiten zum Aufbau und insbesondere zur Zugriffslogik in typischen Dateisystemen für Token wird auf die Norm ISO/IEC 7816-4 verwiesen.

Unter einem "Terminal" wird hier ein elektronisches Gerät verstanden, welches ein Lesegerät umfasst, das einen Lesezugriff und/oder einen Schreibzugriff auf das Token ermöglicht, beispielsweise in Form eines sogenannten Chipkartenterminals. Das Terminal mit dem Lesegerät kann einen integralen Bestandteil eines Nutzer-Computersystems bilden oder als separate Komponente ausgeführt sein, beispielsweise als Peripheriegerät des Nutzer-Computersystems. Insbesondere kann es sich bei dem Lesegerät um ein sogenanntes Klasse 1, 2 oder 3 Chipkartenlesegerät handeln. Das Lesegerät kann mit einer kontaktlosen und/oder kontaktbehafteten Schnittstelle zum Datenaustausch mit einem Token ausgestattet ist.

Nach Ausführungsformen weist der ID-Token keine eigene Energieversorgung auf. Als Energiequelle kann vielmehr eine Vorrichtung zum "Ernten" (energy harvesting) von Energie dienen, welche von dem Terminal an das ID Token übertragen wird, wie beispielsweise eine RFID-Antenne.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhaltet und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystemen dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikates, des sogenannten Wurzelzertifikats, und des durch dieses zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

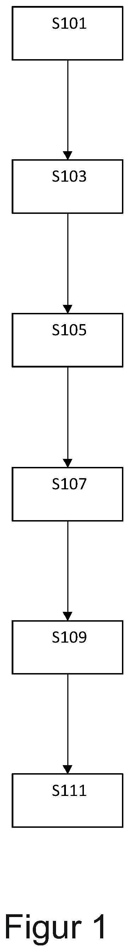

Einen Überblick zur aktuell implementierten PKI findet sich in der technischen Richtlinie TR 3110 des BSI. In Figur 1 der Technical Guideline TR-03110, Part 3, Version 2.21 ist dargestellt, wie eine Ausleseinfrastruktur aufgebaut ist. Jedes Land hat eine Country Verifying Certificate Authority (CVCA), welche jeweilige Document Verifier (DV) zertifizieren kann und ihnen damit die Berechtigung gibt, eine Ausleseberechtigung an ein Terminal auszustellen. Jede der gezeigten Entitäten hat somit ein Berechtigungszertifikat, mit dem die Leseberechtigung gegenüber dem Reisepass oder Personalausweis nachgewiesen werden kann (beispielsweise im Rahmen des EAC-Protokolls). Somit kann im Chip eines Sicherheitsdokuments neben Identitätsdaten eine kryptographische Signatur vorliegen, welche mit einem DV Zertifikat verifizierbar ist. Dieses DV Zertifikat kann ebenfalls in dem Chip vorliegen oder es kann durch Daten des Chips oder des Sicherheitsdokuments referenziert sein. Das DV Zertifikat ist dann wiederum durch eine Signatur des CVCA Zertifikats geschützt.

Damit die verschiedenen Vertrauensanker international verteilt werden können, wurde von der ICAO die "Master List" definiert. Sie wird in einem Lightweight Directory Access Protocoll Verfahren (LDAP-Verfahren) im Public Key Directory (PKD) der ICAO synchronisiert. Außerdem wurde dieses Konzept vom BSI erweitert, so dass die Master List auch per Webservice (SOAP, XML) erreichbar ist, d.h. das Terminal kann den DV anfragen, dieser die CVCA.

Weiterhin ist ebenfalls per LDAP oder Webservice die sogenannte "Defect List" (teilweise auch "Deviation List" genannt) abrufbar, welche verschiedene Fehlerkategorien für ein elektronisches Dokument definiert, siehe Annex A der Technischen Richtlinie 3129 des BSI.

Unter einer "Dokumenten-PKI" wird hier eine public key infrastructure (PKI) verstanden, die zur Erstellung von Zertifikaten für ID-Token, also Dokumente, dient, wobei die Zertifikate zur Prüfung der Authentizität des betreffenden ID-Tokens verwendet werden.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt, um diesem eine Prüfung elektronischer Signaturen auf Authentizität und Gültigkeit zu ermöglichen.

Ein Zertifikat kann einer elektronischen Signatur zugeordnet sein. Diese Zuordnung besteht, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem privaten Schlüssel, welcher zur Verschlüsselung von Daten verwendet wird und im Regelfall geheim gehalten werden muss, und einem öffentlichen Schlüssel, welcher an Dritte, beispielsweise an einen Dienstanbieter und/oder einen ZDA, weitergegeben werden darf. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. In zum Zeitpunkt dieser Anmeldung ausgegebenen Sicherheitsdokumenten wie Reisepässen oder Personalausweisen werden üblicherweise Zertifikate basierend auf Elliptischer-Kurven-Kryptographie (ECC) oder RSA verwendet.

Bei symmetrischen Schlüsseln verwenden beide Teilnehmer des entsprechenden symmetrischen Kryptosystems denselben Schlüssel. Bei manchen symmetrischen Verfahren sind die beiden Schlüssel nicht identisch, aber können leicht auseinander berechnet werden. Symmetrische Schlüssel werden beispielsweise zum Berechnen von Message Authentication Codes (MAC) verwendet.

Als Post-Quanten-Kryptographie (Post-Quantum-Cryptography, PQC) werden kryptographische Verfahren bezeichnet, für die es kein effizientes Verfahren gibt, mit dem sie durch einen Quantencomputer entschlüsselt werden können. Derartige kryptographische Verfahren werden auch als quantensicher bezeichnet.

Unter einem "statischen" Schlüssel wird im Folgenden ein kryptographischer Schlüssel bzw. Datenwert verstanden, welcher in einem nichtflüchtigen Speichermedium gespeichert ist und für mehr als nur einer Sitzung Verwendung finden kann. Im Gegensatz dazu werden "ephemere" Schlüssel, d.h. temporäre kryptographischer Schlüssel bzw. Datenwerte, nur für eine Sitzung generiert und nicht permanent gespeichert, sodass sie in einer weiteren Sitzung nicht mehr verwendet werden können.

Unter einem "statischen" Zertifikat wird im Folgenden ein digitales Zertifikat verstanden, welches für mehr als nur einer Sitzung Verwendung finden kann. Ein statisches Zertifikat kann beispielsweise einen statischen öffentlichen Schlüssel umfassen und mittels eines statischen privaten Schlüssels signiert sein. Im Gegensatz dazu werden "ephemere" Zertifikate mittels temporärer Schlüssel nur für eine Sitzung generiert, sodass sie in einer weiteren Sitzung nicht mehr verwendet werden können.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch als "Signatur", "Identitätssignatur" oder "elektronische Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein mit einem Zertifikat zugeordneten privaten Schlüssel eines kryptographischen Schlüsselpaares verschlüsselter Hashwert. Die Besonderheit einer solchen Signatur besteht darin, dass deren Urheberschaft und Zugehörigkeit zu einer bestimmten Person oder Instanz durch jeden Dritten geprüft werden kann.

Das im ersten Aspekt beschriebene Verfahren kann beispielsweise von einer Vorrichtung zur Überprüfung einer Signatur eines ID Tokens durchgeführt werden. Beispielsweise kann diese Vorrichtung ein Terminal, wie oben beschrieben sein. Alternativ kann diese Vorrichtung auch ein anderes Lesegerät sein, das über eine Schnittstelle zum Auslesen von Daten eines ID Tokens verfügt. Weiterhin ist die Vorrichtung technisch zur Verifizierung von kryptographischen Signaturen von ID Tokens in der Lage und verfügt zu diesem Zweck über eine Anbindung an die PKI. Somit kann beispielsweise alternativ zu einem Terminal auch ein mobiles Endgerät mit Kartenlesefunktion genutzt werden.

In einem ersten Schritt wird in dem beschriebenen Verfahren eine sichere Verbindung zu einem ID Token aufgebaut. Der Ausbau der sicheren Verbindung kann beispielsweise unter Verwendung des EAC Protokolls erfolgen, alternativ unter Verwendung des BAC- oder PACE Protokolls. Die sichere Verbindung ist Voraussetzung dafür, dass Daten aus dem ID Token ausgelesen werden können.

Nach dem Aufbauen der sicheren Verbindung werden in einem weiteren Schritt gespeicherte Identitätsdaten aus dem ID Token ausgelesen. Die gespeicherten Identitätsdaten können beispielsweise persönliche Daten wie Name, Geburtsdatum, Körpergröße und/oder Augenfarbe umfassen. Weiterhin können die Identitätsdaten biometrische Daten wie Fingerabdrücke oder Bilddaten umfassen. In einer Ausführungsform kann beispielsweise eine ganze Datengruppe mit Identitätsdaten ausgelesen werden, beispielsweise in Form der EF.SOD Datengruppe, die im ICAO Dokument 9303 definiert ist. Die EF-SOD Datengruppe umfasst beispielsweise persönliche Daten, biometrische Daten und Signaturdaten.

In einem weiteren Schritt wird eine Dokumentenkennung des ID Tokens erhalten. Die Dokumentenkennung kann beispielsweise aus dem ID Token ausgelesen werden. Alternativ kann die Dokumentenkennung aus den bereits vorher ausgelesenen Identitätsdaten und/oder aus auf dem ID Token aufgedruckten Daten abgeleitet werden. Hierbei könnte es sich beispielsweise um die Daten der Machine Readable Zone (maschinenlesbare Zone, MRZ) des ID Tokens handeln oder es kann eine separate Dokumentenkennung verwendet werden. Die Dokumentenkennung ist vorzugsweise eindeutig, so dass landesweit, vorzugsweise weltweit, keine Dokumentenkennung doppelt vorkommt.

In einem weiteren Schritt wird ein dem ID Token zugeordnetes externes Zertifikat empfangen. Das externe Zertifikat kann beispielsweise bereits in einem lokalen Speicher vorliegen und, basierend auf der Dokumentenkennung oder basierend auf anderen, aus dem ID Token ausgelesenen Daten, wie beispielsweise einem im ID Token gespeicherten internen Zertifikat, geladen werden. Alternativ kann die Dokumentenkennung beispielsweise an eine Zertifikatseinrichtung übermittelt werden, von der dann das externe Zertifikat empfangen wird.

Das externe Zertifikat kann hierbei optional ein behördlich bestätigtes Zertifikat sein und/oder von einer aktuellen Liste zertifizierter, sicherer Zertifikate umfasst sein.

In einem Beispiel kann sich das externe Zertifikat von einem internen Zertifikat, welches auf dem IF Token, bzw. auf dem Chip des ID Tokens gespeichert ist, unterscheiden. Hierbei kann das externe Zertifikat beispielsweise ein Dokumentenzertifikat (der Document Signer Ebene), ein Wurzelzertifikat (der Country Signer Ebene) oder ein Zwischenzertifikat (einer Signaturebene, die zwischen der Document Signer Ebene und der Country Signer Ebene angeordnet ist) sein.

In einem weiteren Schritt wird eine externe Identitätssignatur empfangen, basierend auf der Dokumentenkennung. Die Dokumentenkennung kann hierzu beispielsweise an eine Signaturspeichereinrichtung übersandt werden, die dann die externe Identitätssignatur übermittelt. Alternativ kann die externe Identitätssignatur auch aus einem lokalen Speicher geladen werden, basierend auf der Dokumentenkennung. Die externe Identitätssignatur kann auch als externe Signatur bezeichnet werden.

Optional können das externe Zertifikat und die externe Signatur gemeinsam, in einem Verfahrensschritt empfangen werden. Dies ist beispielsweise der Fall, wenn das externe Zertifikat und die externe Identitätssignatur beide von einer empfangenen externen Datengruppe umfasst sind.

Die externe Identitätssignatur ist hierbei eine unter Verwendung eines dem externen Zertifikat zugeordneten geheimen Schlüssels erstellte kryptographische Signatur von authentischen Identitätsdaten des ID Tokens ist. Authentische Identitätsdaten sind hierbei Identitätsdaten die nicht manipuliert oder verändert wurden, also die originalen Identitätsdaten, die von dem Inhaber des ID Tokens bei der Beantragung des ID Tokens angegeben bzw. erfasst wurden. Die externe Identitätssignatur wurde vorzugsweise in einer sicheren Umgebung erstellt, da der geheime Schlüssel des externen Zertifikats streng geheim gehalten werden muss, um Missbrauch zu verhindern.

Danach wird in einem weiteren Schritt die Authentizität der gespeicherten Identitätsdaten des ID Tokens basierend auf der externen Identitätssignatur und dem externen Zertifikat überprüft. Die Überprüfung kann beispielsweise anhand eines Hashs der gespeicherten Identitätsdaten erfolgen. Somit wird überprüft ob die gespeicherten Identitätsdaten des ID Tokens manipulationsfrei sind, d.h. ob sie gegenüber den authentischen Identitätsdaten unverändert sind.

Durch die Überprüfung der gespeicherten Identitätsdaten anhand der externen Identitätssignatur wird eine Möglichkeit zur zusätzlichen Authentizitätsüberprüfung geschaffen für den Fall, dass die im ID Token gespeicherte Signatur kompromittiert wurde. Ein Vorteil des hier beschriebenen Verfahrens liegt darin, dass keine Veränderung der gespeicherten Identitätsdaten auf dem ID Token notwendig ist, sondern dass eine zusätzliche externe Überprüfung ermöglich wird. Das beschriebene Verfahren eignet sich aufgrund der langen Laufzeit mancher ID Token vor allem für Übergangsregelungen, bzw. Migrationsszenarien, d.h. um eine zusätzliche Absicherung älterer ID Tokens während bzw. vor der Aktualisierung der älteren ID Tokens zu ermöglichen.

Zu beachten ist hierbei, dass das beschriebene Verfahren lediglich dazu dient eine Veränderung der im ID Token abgespeicherten Identitätsdaten zu detektieren. Ein unberechtigtes Auslesen oder auch Kopieren von Identitätsdaten oder auch von ganzen Datengruppen aus dem Speicher des ID Tokens wird durch das beschriebene Verfahren nicht verhindert. Somit sollte bei einer Identitätsprüfung vorzugsweise noch zusätzlich eine Sichtkontrolle oder Kontrolle der biometrischen Merkmale stattfinden um den Karteninhaber visuell bzw. biometrisch mit den auf dem ID Token gespeicherten Identitätsdaten abzugleichen.

In einer optionalen Ausgestaltung des Verfahrens des ersten Aspekts kann das Empfangen des externen Zertifikats ein Übermitteln der Dokumentenkennung und/oder eines aus dem ID Token ausgelesenen internen Zertifikats an eine Zertifikatseinrichtung, sowie ein Empfangen des externen Zertifikats von der Zertifikatseinrichtung basierend auf der übermittelten Dokumentenkennung bzw. des übermittelten internen Zertifikats umfassen.

Das externe Zertifikat kann hierbei in einer Ausgestaltung ein externes Dokumentenzertifikat, d.h. ein Zertifikat der Document Verifier Ebene (untere Ebene sein), welches zur Verifikation von externen Identitätssignaturen eingesetzt wird. Zusätzlich kann in diesem Fall noch ein externes Wurzelzertifikat vorhanden sein, welches zur Verifikation einer Signatur des externen Dokumentenzertifikats verwendet wird. Das externe Wurzelzertifikat kann beispielsweise von einer Zertifikatseinrichtung übertragen werden oder es kann bereits auf der ausführenden Vorrichtung vorliegen. Optional können auch noch weitere Zwischenzertifikate vorliegen, die sich in einer PKI-Hierarchie zwischen dem Dokumentenzertifikat und dem Wurzelzertifikat befinden.

Das externe Zertifikat kann alternativ ein Wurzelzertifikat, d.h. ein Zertifikat der Country Signer Ebene (oberen Ebene) sein. Bei einem externen Zertifikat der Country Signer Ebene, könnte zusätzlich noch ein externes Dokumentenzertifikat der Document Verifier Ebene übermittelt werden, welches beispielsweise zusammen mit dem externen Wurzelzertifikat, der externen Identitätssignatur oder separat übermittelt werden kann.

Bei einem externen Zertifikat der unteren (Dokument Verifier) Ebene könnte dieses externe Zertifikat in die PKI eingebunden sein und Referenzen auf die weiteren hierarchischen Zertifikate der Country Verifier Ebene umfassen.

Durch ein Empfangen des externen Zertifikats von einer Zertifikatseinrichtung basierend auf vom Terminal übermittelten Informationen können externe Zertifikate punktuell angefordert werden, was sowohl Ressourcen schont als auch die Sicherheit erhöht, da nur das jeweils aktuelle externe Zertifikat übermittelt wird. Die Zertifikatseinrichtung kann die externen Zertifikate entweder basierend auf dem individuellen ID Token übersenden, wofür die Dokumentenkennung verwendet werden kann. Alternativ kann die Übersendung des externen Zertifikats basierend auf einem ersten, aktuell für das ID Token verwendeten und im ID Token gespeicherten internen Zertifikat, erfolgen.

Alternativ zur punktuellen Übermittlung des externen Zertifikats, kann das externe Zertifikat sich bereits in einem lokalen Speicher der Vorrichtung, die das Verfahren des ersten Aspekts ausführt, befinden. Dies ist beispielsweise dann der Fall, wenn verfügbare externe Zertifikate regelmäßig von der Vorrichtung heruntergeladen werden, damit diese dann auch lokal bzw. offline verfügbar sind. Auch in einem lokalen Speicher kann das externe Zertifikat basierend auf der Dokumentenkennung des ID Tokens oder basierend auf einem internen Zertifikat, das in dem ID Token gespeichert ist, erfolgen.

In einer optionalen Ausgestaltung des Verfahrens des ersten Aspekts kann das Empfangen der externen Identitätssignatur basierend auf der Dokumentenkennung ein Übermitteln der Dokumentenkennung an eine Signaturspeichereinrichtung und ein Empfangen der externen Signatur von der Signaturspeichereinrichtung umfassen.

Die Signaturspeichereinrichtung ist hierbei vorzugsweise eine externe, sichere Speichereinrichtung, auf der eine Datenbank mit externen Identitätssignaturen gespeichert ist. Aus der externen Datenbank können externe Identitätssignaturen individuell bzw. punktuell basierend auf der Dokumentenkennung geladen werden. Durch ein punktuelles Laden der externen Identitätssignatur basierend auf der Dokumentenkennung werden Ressourcen geschont und der Datenschutz wird gewahrt, da nur wirklich benötigte Signaturen geladen werden. Beispielsweise können diese geladenen externen Identitätssignaturen nach der Verwendung dann wieder von der Vorrichtung gelöscht werden, um eine missbräuchliche Verwendung der externen Identitätssignaturen zu verhindern.

Um den Datenschutz weiter zu erhöhen kann die Kommunikation zwischen der Vorrichtung, die das Verfahren gemäß Aspekt 1 ausführt, und der externen Signaturspeichereinrichtung über eine gesicherte und/oder verschlüsselte Kommunikationsverbindung erfolgen.

Die Signaturspeichereinrichtung ist hierbei beispielsweise ein externer Speicher, auf den nur unter Wahrung von Sicherheitsvorkehrungen zugegriffen werden kann bspw. mit verschlüsselter Kommunikation, vorzugsweise quantensichere bzw. PQC-Verschlüsselung, um einen Missbrauch der gespeicherten externen Identitätssignaturen zu verhindern.

Die Zertifikatseinrichtung und die Signaturspeichereinrichtung sind beispielsweise getrennte, d.h. verschiedene Einrichtungen, die an unterschiedlichen physischen und/oder virtuellen Orten hinterlegt sind, um einen Missbrauch der gespeicherten Daten weiterhin zu erschweren bzw. zu verhindern. Es ist aber alternativ auch möglich, dass die Zertifikatseinrichtung und Signatureinrichtung am selben Ort bzw. durch eine einzige Speichereinrichtung realisiert sind.

In einer alternativen Ausgestaltung ist es auch möglich, dass die externe Identitätssignatur und/oder das externe Zertifikat in einer zusätzlichen Datengruppe des ID Tokens, d.h. im internen Speicher des ID Tokens aber außerhalb des Speicherbereichs der internen Identitätssignatur des ID Tokens gespeichert sind und von dort an das Terminal zur Überprüfung übertragen werden. Eine solche zusätzliche Datengruppe könnte beispielsweise als EF.PQC bezeichnet werden. In diesem Fall könnte das zugehörige externe Zertifikat entweder auch in der zusätzlichen Datengruppe des ID Tokens gespeichert werden oder, wie oben beschrieben, auf einer externen Zertifikatseinrichtung.

Optional kann das Auslesen der Identitätsdaten das Auslesen eines Sicherheitsobjekts des ID Token umfassen. Hierbei kann das Sicherheitsobjekt die gespeicherten Identitätsdaten, eine interne Signatur der Identitätsdaten und/oder ein dazugehöriges internes Zertifikat umfassen. Die interne Signatur kann auch als "erste Signatur" und das interne Zertifikat kann auch als "erstes Zertifikat" bezeichnet werden. Das Auslesen von Daten aus einem ID Token wie dem Chip eines Reisepasses, Personalausweises oder anderen Sicherheitsdokuments kann blockweise implementiert sein, so dass jeweils eine ganze Datengruppe ausgelesen wird. Im Falls des Reisepasses sind die Identitätsdaten im EF.SOD Feld gespeichert, welches als eine Datengruppe ausgelesen werden kann. Das EF.SOD umfasst Identitätsdaten, sowie einen Hash gebildet über den Identitätsdaten und eine Signatur, die basierend auf dem Hash gebildet wurde. Außerdem umfasst das EF.SOD beispielsweise ein internes Zertifikat, welches für die Überprüfung der Signatur verwendet werden kann. Das EF.SOD ermöglicht es somit, die Authentizität der Identitätsdaten anhand der internen Signatur und des internen Zertifikats unter Verwendung der PKI zu überprüfen, wie in dem ICAO Dokument 9303 beschrieben. Zum Zeitpunkt dieser Schutzrechtsanmeldung verwendete Signaturen und Zertifikate beruhen dabei auf dem asymmetrischen Kryptographieverfahren ECC oder RSA, welche im Falle der Entwicklung eines kryptographisch relevanten Quantencomputers nicht mehr als sicher gelten. Deshalb kann die Verwendung einer externen Signatur und eines externen Zertifikats die Sicherheit erhöhen, insbesondere, wenn für das externe Zertifikat ein quantensicheres, bzw. ein PQC-Verfahren verwendet wird.

Optional kann das Empfangen einer externen Identitätssignatur das Empfangen eines externen Sicherheitsobjekts umfassen, welches externe Identitätsdaten sowie die externe Identitätssignatur umfasst. Auf diese Art und Weise kann ein fehlerhaftes Sicherheitsobjekt des ID Tokens durch ein externes Sicherheitsobjekt ersetzt werden, ohne dass die auf dem ID Token gespeicherten Daten verändert werden müssen. Somit wird eine zusätzliche Flexibilität erreicht und eine Übergangslösung bis zum Austausch des ID Tokens zu Verfügung gestellt.

Das externe Sicherheitsobjekt kann optional außerdem das externe Zertifikat umfassen, so dass das Empfangen des externen Zertifikats und der externen Identitätssignatur in einem Schritt durchgeführt werden kann.

Das beschriebene Verfahren kann optional weiterhin ein Auslesen einer Zertifikatsspeicherinformation und ein Aufbauen der Verbindung zu der Zertifikatseinrichtung basierend auf der Zertifikatsspeicherinformation umfassen. Die Zertifikatsspeicherinformation kann hierbei beispielsweise aus dem ID Token oder aus der ausführenden Vorrichtung, beispielsweise aus dem Speicher eines Terminals zur Verifikation des ID Tokens, ausgelesen werden. Beispielsweise kann die Zertifikatsspeicherinformation aus dem ID Token ausgelesen werden, beispielsweise aus dem Document Signer Zertifikat des ID Tokens. Alternativ kann die Zertifikatsspeicherinformation auf dem Terminal, welches das beschriebene Verfahren ausführt, hinterlegt sein. Die Zertifikatsspeicherinformation kann hierbei beispielsweise der ICAO Masterlist entsprechen, die basierend auf dem Lightweight Directory Access Protokoll (LDAP) gemäß dem ICAO Dokument 9303, oder über den ICAO Webservice erreichbar und abrufbar sein kann.

Optional kann das Verfahren weiterhin, vor dem Empfangen des externen Zertifikats und vor dem Empfangen der externen Signatur die folgenden Schritte umfassen:
- Abgleichen der Dokumentenkennung, der Identitätsdaten oder eines aus dem ID Token ausgelesenen internen Zertifikats mit einer externen Fehlerliste; und
- Empfangen von Informationen der externen Fehlerliste, wobei die Informationen der externen Fehlerliste umfassen, dass für das ID Token eine externe Signatur vorliegt.

In einer externen Fehlerliste können alle Dokumentenkennungen und/oder Zertifikate hinterlegt sein, für die es eine externe Identitätssignatur gibt. Auf diesem Weg wird nur dann eine externe Identitätssignatur und/oder ein externes Zertifikat angefragt, wenn für das ID Token tatsächlich eine externe Identitätssignatur bzw. ein externes Zertifikat vorliegt.

Die Fehlerliste kann beispielsweise als Defect List oder Deviation List, wie in der TR-03129 des BSI beschrieben über ein LDAP oder über einen Webservice abrufbar sein.

Die Fehlerliste kann weiterhin optional Speicherorte der externen Identitätssignatur umfassen. Alternativ oder zusätzlich kann optional die externe Signatur von der Fehlerliste umfasst sein.

Um die Sicherheit durch eine externe Identitätssignatur zu erhöhen, ist es optional möglich, dass das externe Zertifikat mit einem externen kryptographischen Verfahren erstellt wurde, wobei das externe kryptographische Verfahren sich von einem internen kryptographischen Verfahren, mit dem das interne Zertifikat des ID Tokens erstellt wurde, unterscheidet.

Beispielsweise kann das externe Zertifikat ein auf Post-Quanten-Kryptographie (Post Quantum Cryptography, PQC) basierendes Zertifikat sein, welches nicht durch einen Quantencomputer in geringer Zeit entschlüsselt werden kann. Beispielsweise kann hierzu das externe Zertifikat ein basierend auf einem der folgenden asymmetrischen kryptographischen Verfahren erstelltes Zertifikat sein: gitterbasierte Kryptographie, Hash-basierte Kryptographie, multivariate Polynome, fehlerkorrigierende Codes und/oder supersinguläre elliptische Kurven.

Durch die Verwendung eines Post-Quanten-Zertifikats und einer zugehörigen Post-Quanten-Signatur als externer Identitätssignatur kann ein erheblicher Gewinn an Datensicherheit erzielt werden. Insbesondere ist es somit beispielsweise möglich ein ID Token, welches nur über eine ECC- oder RSA-basierte Signatur verfügt, zusätzlich mit einem externen Post-Quanten-Zertifikat abzusichern und somit Manipulationen am ID Token zu detektieren bzw. zu verhindern.

Optional kann vor den beschriebenen Verfahrensschritten zum Empfangen des externen Zertifikats und der externen Signatur auch noch ein Schritt zum Überprüfen, ob im ID Token bereits PQC-Signaturen verwendet wurden, implementiert sein. Hierbei kann beispielsweise ein internes Zertifikat oder eine interne Signatur aus dem ID Token ausgelesen werden und es kann danach überprüft werden, mit welchem kryptographischen Verfahren die interne Signatur bzw. das interne Zertifikat erstellt wurde. In diesem Fall werden die weiteren Schritte zum Empfangen und Überprüfen der externen Identitätssignatur nur ausgeführt, wenn die im ID Token verwendete interne Signature nicht PQCtauglich ist.

In einem weiteren Aspekt umfasst die vorliegende Anmeldung ein Verfahren zur Erstellung der externen Signatur. Dieses Verfahren kann optional vor dem im ersten Aspekt beschrieben Verfahren zur Überprüfung der externen Signatur durchgeführt werden.

Das Verfahren zur Erstellung einer externen Identitätssignatur für ein ID Token umfasst die folgenden Schritte:
- Erhalten eines privaten externen Schlüssels und eines dem privaten externen Schlüssel zugeordneten externen Zertifikats;
- Aufbauen einer ersten sicheren Verbindung zum ID Token;
- Auslesen von Identitätsdaten aus dem ID Token;
- Überprüfen der Authentizität der Identitätsdaten anhand einer im ID Token gespeicherten internen Signatur und einem internen Zertifikat; und
- Erstellen der externen Identitätssignatur basierend auf den Identitätsdaten unter Verwendung des privaten externen Schlüssels.

Das Erhalten des privaten externen Schlüssels kann beispielsweise durch das Laden des privaten externen Schlüssels aus einem Speicher erfolgen. Alternativ kann das Erhalten des privaten externen Schlüssels ein Erstellen des privaten externen Schlüssels umfassen.

Beispielsweise kann ein Erstellen des privaten externen Schlüssels und/oder des externen Zertifikats durch eine externe Zertifikatseinrichtung durchgeführt und auch das Erstellen der externen Identitätssignatur wird nach Übermittlung der Identitätsdaten an die Zertifikatseinrichtung durch die Zertifikatseinrichtung durchgeführt.

Nach der Erstellung der externen Identitätssignatur kann diese beispielsweise in der ausführenden Vorrichtung, einem Terminal und/oder einer Signaturspeichereinrichtung abgespeichert werden.

Alternativ ist es auch möglich, die erstelle externe Identitätssignatur an das ID Token zu übertragen um sie dort abzuspeichern, beispielsweise in einer zusätzlichen Datengruppe, die zusätzlich zu der Datengruppe die die interne Identitätssignatur beinhaltet, abgespeichert wird. Eine solche zusätzliche Datengruppe könnte beispielsweise als EF-PQC bezeichnet werden.

Weiterhin kann ein der internen Signatur zugeordnetes internes Zertifikat oder eine Dokumentenkennung des ID Tokens in einer Fehlerliste abgelegt werden. Alternativ oder zusätzlich kann außerdem das interne Zertifikat in einer Speicherinformation abgelegt werden. Die Fehlerliste und/oder Speicherinformation dient dem Auffinden der neu erstellen externen Identitätssignatur und des zugehörigen externen Zertifikats.

Alternativ zum hier beschriebenen Verfahren zum Erstellen einer externen Identitätssignatur ist es auch möglich, dass die externe Identitätssignatur bereits bei der Produktion des ID Tokens zusätzlich generiert und abgelegt wird.

Alternativ ist es außerdem möglich, das externe Identitätssignaturen für ID Tokens anhand von behördlich gespeicherten Daten erstellt werden können. Dies hat den Vorteil, dass keine aktive Mitarbeit des Inhabers des ID Tokens notwendig ist, um die externe Identitätssignatur zu erstellen.

Ein weiterer Aspekt der Erfindung betrifft eine Vorrichtung zur Authentizitätsüberprüfung mittels einer Signatur. Beispielsweise kann die Vorrichtung ein Terminal zum Auslesen einer Chipkarte sein. Die Vorrichtung umfasst einen Speicher, eine Kommunikations-schnittstelle und einen Prozessor. Der Prozessor ist konfiguriert die folgenden Schritte durchzuführen:
- Aufbauen, unter Verwendung der Kommunikationsschnittstelle, einer sicheren Verbindung zu einem ID Token;
- Auslesen von gespeicherten Identitätsdaten aus dem ID Token;
- Erhalten oder Ermitteln einer Dokumentenkennung des ID Tokens;
- Empfangen eines dem ID Token zugeordneten externen Zertifikats;
- Empfangen einer externen Identitätssignatur basierend auf der Dokumentenkennung, wobei die externe Identitätssignatur eine unter Verwendung des dem externen Zertifikat zugeordneten geheimen Schlüssels erstellte kryptographische Signatur von authentischen Identitätsdaten des ID Tokens ist; und
- Überprüfen der Authentizität der gespeicherten Identitätsdaten des ID Tokens basierend auf der externen Identitätssignatur und dem externen Zertifikat.

Optional kann der Prozessor der beschriebenen Vorrichtung weiterhin konfiguriert sein, die weiteren im Kontext der anderen Aspekte beschriebenen Verfahrensschritte durchzuführen.

Ein weiterer Aspekt der Erfindung betrifft ein System zur Authentizitätsüberprüfung mittels einer Signatur umfassend eine Vorrichtung zur Authentizitätsüberprüfung gemäß dem eben beschriebenen Aspekt und weiterhin umfassend eine Zertifikatseinrichtung und/oder eine Signaturspeichereinrichtung. Hierbei ist die Zertifikatseinrichtung konfiguriert zum Übermitteln des dem ID Token zugeordneten externen Zertifikats an die Authentifizierungsvorrichtung. Weiterhin ist die Signaturspeichereinrichtung konfiguriert zum Übermitteln der externen Signatur an die Authentifizierungsvorrichtung.

Nochmals mit anderen Worten zusammengefasst, die Erfindung betrifft ein Verfahren sowie eine Vorrichtung und System zur Authentizitätsüberprüfung mittels einer Signatur. Das Verfahren zur Überprüfung einer externen Signatur umfasst ein Aufbauen einer sicheren Verbindung zu einem ID Token; ein Auslesen von gespeicherten Identitätsdaten aus dem ID Token; ein Erhalten einer Dokumentenkennung des ID Tokens; ein Empfangen eines dem ID Token zugeordneten externen Zertifikats; ein Empfangen einer externen Signatur basierend auf der Dokumentenkennung, wobei die externe Signatur eine unter Verwendung des dem externen Zertifikat zugeordneten geheimen Schlüssels erstellte kryptographische Signatur von authentischen Identitätsdaten des ID Tokens ist; und ein Überprüfen der Authentizität der gespeicherten Identitätsdaten des ID Tokens basierend auf der externen Signatur und dem externen Zertifikat. Weiterhin ist auch ein Verfahren zum Erstellen einer externen Signatur beschrieben.

Grundsätzlich wird angemerkt, dass alle Merkmale, die in Bezug auf bestimmte Aspekte oder Ausführungsformen der Erfindung offenbart werden, auch mit anderen Aspekten oder Ausführungsformen der Erfindung technisch sinnvoll kombinierbar sind. Dies gilt auch über unterschiedliche technische Gegenstände und Gegenstandskategorien hinweg. Insbesondere gilt dies auch auszugsweise für einzelne Merkmale, solange hierin nicht explizit darauf hingewiesen wird oder es durch einen technischen Widerspruch offensichtlich ist, dass zwischen bestimmten Merkmalen ein untrennbarer funktional-technischer Zusammenhang besteht, der zur Ausführung der Erfindung beibehalten werden muss.

Im Folgenden wird die Erfindung anhand von Ausführungsbeispielen und deren skizzenhafter Darstellung erläutert. Hierbei zeigen:
- Figur 1: ein Ablaufdiagramm eines Verfahrens zur Authentizitätsüberprüfung mittels einer externen Signatur;
- Figur 2: eine schematische Darstellung einer Vorrichtung zur Authentizitätsüberprüfung mittels der externen Signatur;
- Figur 3: eine schematische Darstellung eines Systems zur Authentizitätsüberprüfung mittels der externen Signatur;
- Figur 4: ein Interaktionsdiagramm einer Ausgestaltung des Verfahrens zur Authentizitätsüberprüfung mittels der externen Signatur;
- Figur 5: ein Interaktionsdiagramm einer weiteren Ausgestaltung des Verfahrens zur Authentizitätsüberprüfung mittels der externen Signatur;
- Figur 6: ein Interaktionsdiagramm einer weiteren Ausgestaltung des Verfahrens zur Authentizitätsüberprüfung mittels der externen Signatur; und
- Figur 7: ein Interaktionsdiagramm einer Ausgestaltung eines Verfahrens zur Erstellung einer externen Signatur.

Figur 1 zeigt einen schematischen Ablauf eines Verfahrens zum Überprüfen einer externen Signatur einer Chipkarte. Eine externe Signatur, die auch als externe Identitätssignatur bezeichnet werden kann, kann angelegt werden, um eine zusätzliche Absicherung der Authentizität der auf der Chipkarte gespeicherten persönlichen Daten zu erreichen. Beispielsweise kann es sich bei der Chipkarte um einen Personalausweis oder einen Reisepass handeln. Die aktuell auf den Chips der deutschen Personalausweise und Reisepässe verwendete interne Signatur wird während der Produktion der Chipkarte basierend auf Elliptischer-Kurven-Kryptographie (Elliptic Curve Cryptogrtaphy, ECC) erstellt. Diese Signaturen sind sicher gegenüber Angriffen mit konventionellen Computern, können aber im Fall eines kryptographisch relevanten Quantencomputers gebrochen werden. Da Chipkarten oft sehr lange Laufzeiten haben, wird nach Übergangslösungen zur zusätzlichen Absicherung der Authentizität der auf dem Chip gespeicherten Identitätsdaten gesucht. Konkret soll durch die Signatur die Manipulation der Identitätsdaten unterbunden werden, oder eine erfolgte Manipulation kann zumindest detektierbar gemacht werden.

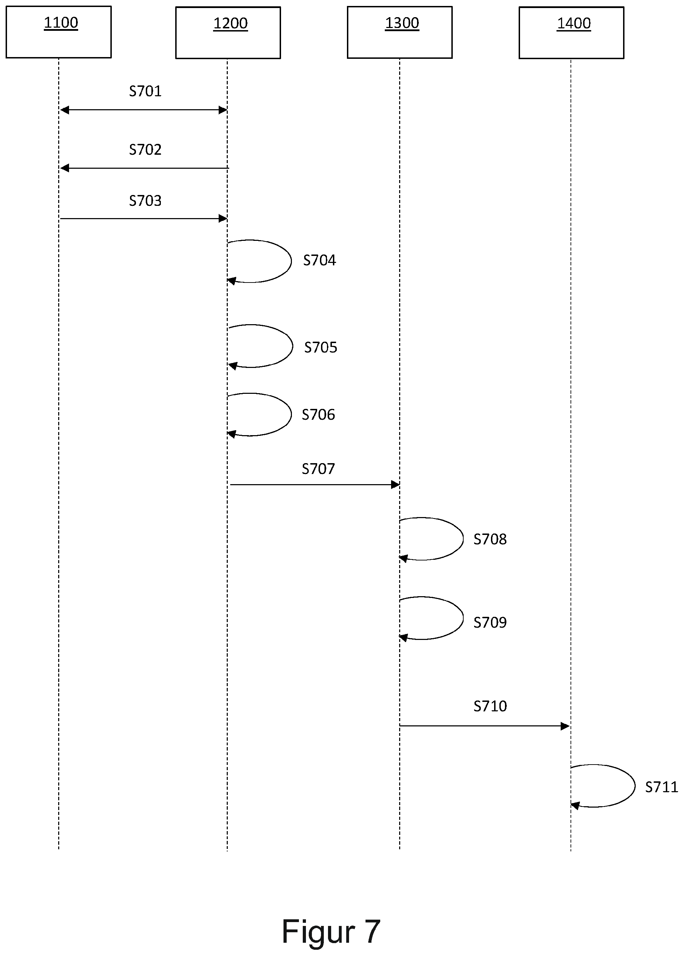

Das in Figur 1 gezeigte Verfahren ist anwendbar, wenn bereits eine externe Signatur existiert, die dann mit dem gezeigten Verfahren überprüft werden kann. Verfahren zur Erstellung einer solchen externen Signatur sind ebenfalls im Weiteren beschrieben, insbesondere mit Bezug auf Figur 7.

Figur 1 zeigt das Verfahren, wie es aus Sicht eines Terminals ausgeführt wird, welches auch als Vorrichtung oder Verifizierungsvorrichtung bezeichnet werden kann.

In einem ersten Schritt S101 wird eine gesicherte Verbindung zu der Chipkarte aufgebaut. Diese gesicherte Verbindung kann beispielsweise basierend auf dem BAC, EAC oder PACE Protokoll aufgebaut werden. Durch die gesicherte Verbindung erhält das Terminal Zugriff auf einige auf der Chipkarte gespeicherten Daten.

In einem weiteren Schritt S103 werden, unter Verwendung der gesicherten Verbindung, Identitätsdaten von der Chipkarte durch das Terminal empfangen. Dies kann beispielsweise in Form eines Lesezugriffs des Terminals auf die Chipkarte erfolgen. Typischerweise können so persönliche Daten wie Name, Adresse sowie biometrische Daten und auch eine interne Signatur, die basierend auf dem ECC-Verfahren erstellt wurde, sowie ein zugehöriges Zertifikat, von der Chipkarte ausgelesen werden.

In einem weiteren Schritt S105 wird durch das Terminal eine Dokumentenkennung der Chipkarte empfangen. Dies kann durch ein Auslesen der Dokumentenkennung aus dem Chip der Chipkarte erfolgen. Alternativ kann die Dokumentenkennung aus den bereits ausgelesenen Identitätsdaten gewonnen werden oder die Dokumentenkennung kann von einem sichtbaren Aufdruck der Chipkarte abgelesen werden. Beispielsweise kommt als Dokumentenkennung ein Auslesen der maschinenlesbaren Zone (Machine Readable Zone, MRZ) des Reisepasses in Frage.

In einem weiteren Schritt S107 wird vom Terminal ein externes Zertifikat empfangen. Dieses externe Zertifikat kann beispielsweise basierend auf der Dokumentenkennung, oder basierend auf anderen ausgelesenen Daten, aus einem lokalen oder entfernten Speicher ausgelesen werden.

In einem weiteren Schritt S109 wird vom Terminal eine externe Signatur empfangen. Diese externe Signatur kann ebenfalls beispielsweise basierend auf der Dokumentenkennung aus einem lokalen oder entfernten Speicher ausgelesen werden.

Wichtig ist hierbei, dass die externe Signatur basierend auf Originaldaten erstellt wurde, die der Chipkarte zugeordnet sind. D.h. die externe Signatur wurde basierend auf authentischen Daten erstellt, bevor es eine mögliche Manipulation der in der Chipkarte gespeicherten Originaldaten gegeben hat. Bei der Erstellung der externen Signatur wurden somit die Originaldaten, die bei der Ausstellung der Chipkarte auf dem Chip der Chipkarte gespeichert wurden, verwendet und die Signatur wurde unter Verwendung eines dem externen Zertifikat zugeordneten privaten Schlüssels erstellt. Das externe Zertifikat ist hierbei beispielsweise ein anderes Zertifikat als die bereits für die Chipkarte auf der Chipkarte gespeicherten Signaturen verwendeten Zertifikate.

Da das Verwenden einer externen Signatur insbesondere der Absicherung gegen Angriffe auf die Authentizität der im ID Token gespeicherten Daten unter Verwendung eines Quantencomputers dienen kann, wird als externes Zertifikat beispielsweise ein PQC-Zertifikat verwendet, d.h. ein kryptographisches Zertifikat, welches basierend auf einem Verfahren erstellt wurde, das auch im Lichte eines kryptographisch relevanten Quantencomputers noch als sicher gilt, da es nicht durch einen Quantencomputer in geringer Zeit entschlüsselt werden kann. Beispielsweise kann hierzu das externe Zertifikat ein basierend auf einem der folgenden asymmetrischen kryptographischen Verfahren erstelltes Zertifikat sein: gitterbasierte Kryptographie, Hash-basierte Kryptographie, multivariate Polynome, fehlerkorrigierende Codes und/oder supersinguläre elliptische Kurven.

Das Empfangen einer externen Signatur kann hierbei das Empfangen eines externen EF.SOD, welches auch als EF.SOD1 oder EF.PQC bezeichnet werden kann umfassen. Dieses externe Sicherheitsobjekt umfasst externe Identitätsdaten sowie die externe Signatur und ggf. auch das externe Zertifikat. Auf diese Art und Weise kann ein fehlerhaftes oder veraltetes EF.SOD der Chipkarte ersetzt werden, ohne dass gespeicherten Daten der Chipkarte verändert werden müssen.

Unter diesen Voraussetzungen ist es nun möglich, in Schritt S111 die Authentizität, d.h. Manipulationsfreiheit, der Identitätsdaten der Chipkarte anhand der externen Signatur und des externen Zertifikats zu verifizieren. Hierzu wird beispielsweise ein neu gebildeter Hash über die ausgelesenen Identitätsdaten gebildet, und dann anhand des externen Zertifikats überprüft, ob die externe Signatur für diese gehashten Identitätsdaten korrekt ist.

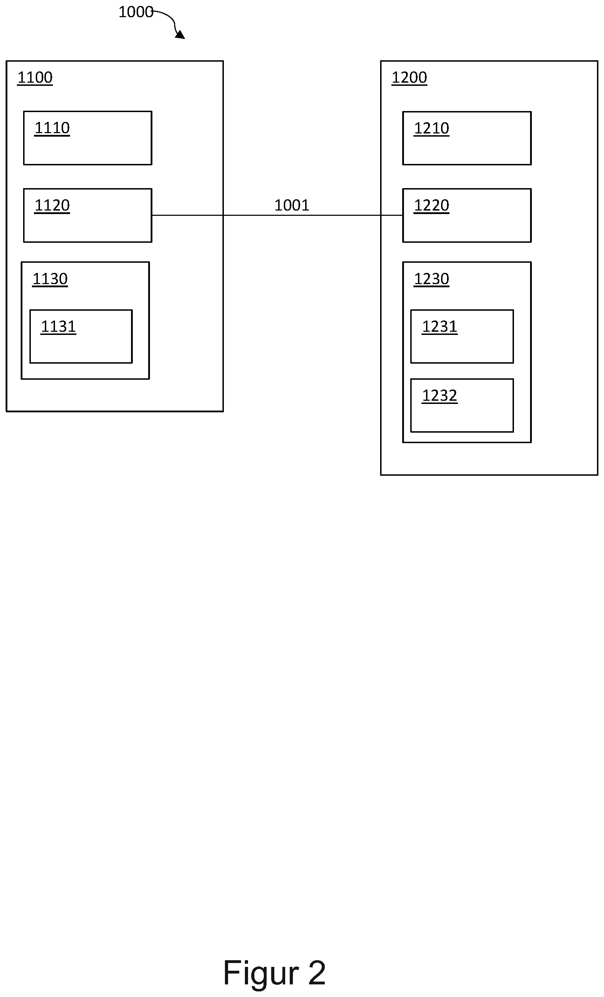

Figur 2 zeigt eine schematische Übersicht eines elektronischen Systems 1000, bestehend aus einem Terminal 1200, welches die hier beschriebenen Verfahren ausführen kann, in Kombination mit einer Chipkarte 1100.

Die Chipkarte umfasst einen Mikroprozessor 1110, eine Kommunikationsschnittstelle 1120 und einen internen Speicher 1130. Im internen Speicher 1130 der Chipkarte 1100 ist unter anderem ein Sicherheitsobjekt 1131 gespeichert. Dieses im ICAO-Standard auch als EF.SOD bezeichnete Sicherheitsobjekt umfasst unter anderem Identitätsdaten, eine interne Signatur und ein zugehöriges internes Zertifikat der Document Signer Ebene, welches Teil der PKI ist. Mit den Daten aus dem Sicherheitsobjekt 1131 kann die passive Authentifizierung durchgeführt werden, bei der die Echtheit bzw. Manipulationsfreiheit der Identitätsdaten unter Verwendung der internen Signatur und des internen Zertifikats geprüft wird. Da die aktuell verwendeten Signaturen auf klassischen kryptgraphischen Verfahren wie RSA oder ECC beruhen, sind sie im Fall eines kryptographisch relevanten Quantencomputers nicht mehr sicher.

Das Terminal 1200 umfasst zumindest einen Prozessor 1210, eine Kommunikations-schnittstelle 1220 und einen internen Speicher 1230. Zwischen der Kommunikations-schnittstelle 1120 der Chipkarte 1100 und der Kommunikationsschnittstelle 1220 des Terminals 1200 kann einen sichere Verbindung 1001 aufgebaut werden, beispielsweise unter Verwendung des BAC, EAC oder PACE Protokolls. In der in Figur 2 gezeigten Variante sind im internen Speicher 1230 des Terminals 1200 das externe Zertifikat 1231 und die externe Signatur 1232 gespeichert. Dies ist beispielsweise dann möglich, wenn das Terminal 1200 regelmäßig externe Zertifikate und externe Signaturen importiert, um aktuelle externe Daten für einen schnellen Zugriff bereit zu halten.

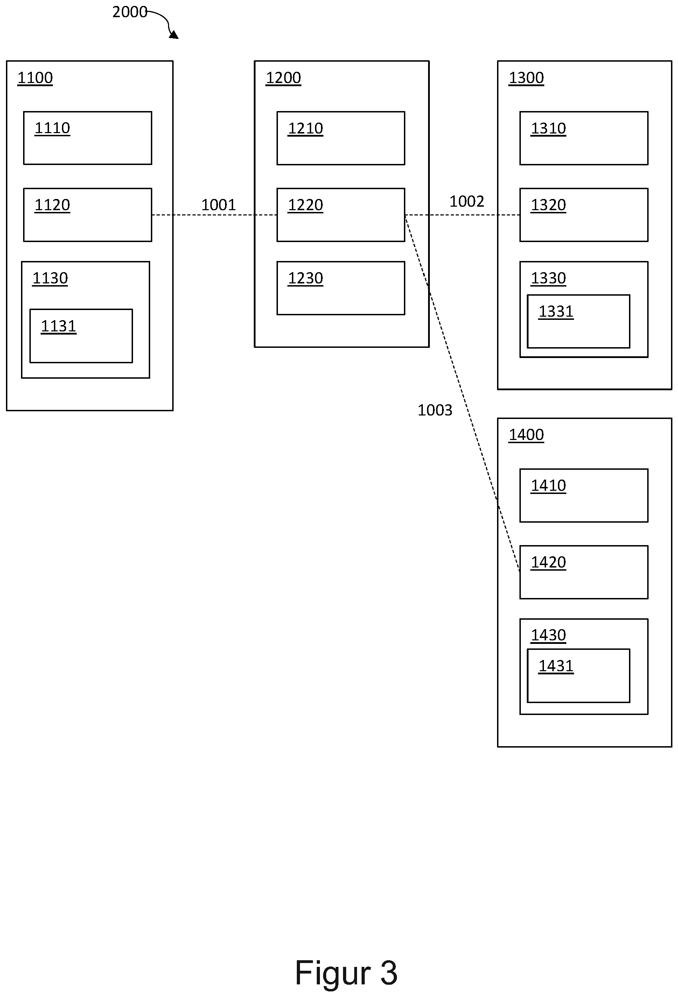

In Figur 3 wird eine weitere Ausgestaltung eines elektronischen Systems 2000 gezeigt, welches neben der Chipkarte 1100 und dem Terminal 1200 zusätzlich noch einen Zertifikatsserver 1300 und einen Signaturserver 1400 umfasst.

Zusätzlich zu den bereits im Kontext von Figur 2 beschriebenen Merkmalen, beinhaltet das elektronische System 2000 einen Zertifikatsserver 1300, der entfernt vom Terminal 1200 angeordnet ist. Der Zertifikatsserver 1300 verfügt zumindest über einen internen Prozessor 1310, eine Kommunikationsschnittstelle 1320, über die eine sichere Verbindung 1001 zum Terminal 1200 aufgebaut werden kann, sowie über einen internen Speicher 1330, der in der Ausgestaltung von Figur 3 das externe Zertifikat 1331 beinhaltet.

Weiterhin umfasst das elektronische System 1200 einen Signaturserver 1400, der zumindest einen Prozessor 1410, eine Kommunikationsschnittstelle 1420, über die eine sichere Verbindung 1003 zur Kommunikationsschnittstelle 1220 des Terminals 1200 aufgebaut werden kann. Weiterhin verfügt der Signaturserver 1400 über einen internen Speicher 1430, der die externe Signatur 1431 beinhaltet.

In der Ausgestaltung von Figur 3 enthält der interne Speicher 1230 des Terminals 1200 somit zunächst nicht das externe Zertifikat oder die externe Signatur, diese können jedoch über die sicheren Verbindungen 1002, 1003 an das Terminal übertragen werden, wie im Folgenden auch beschrieben.

Mittels der Kommunikationsschnittstellen 1120, 1220, 1320, 1420 der Komponenten des elektronischen Systems 1200 sind auch andere als die in Figur 3 dargestellten sicheren Verbindungen 1001, 1002, 1003 möglich. Somit ist es beispielsweise möglich, dass eine direkte sichere Verbindung zwischen der Chipkarte 1100 und dem Zertifikatsserver 1400 aufgebaut werden kann, beispielsweise unter Verwendung des EAC Protokolls und unter Verwendung der Kommunikationsschnittstelle 1220 des Terminals, welches aber in diesem Fall nur die Daten weitergibt und selbst keinen Zugriff auf die zwischen Chipkarte und Zertifikatsserver ausgetauschten Daten erhält. Eine entsprechende sichere Verbindung ist ebenfalls zwischen der Chipkarte 1100 und dem Signaturserver 1400 möglich.

Auch ist es möglich, dass eine sichere Verbindung zwischen dem Zertifikatsserver 1300 und dem Signaturserver 1400 aufgebaut wird, um einen sicheren Datenaustausch zwischen diesen Komponenten zu ermöglichen.

Alternativ zu den in Figur 2 und 3 gezeigten Ausgestaltungen ist auch ein System mit einem einzigen externen Server, der gleichzeitig Zertifikatsserver und Signaturserver ist, möglich.

In einer alternativen Ausgestaltung ist es auch möglich, dass die externe Signatur und/oder das externe Zertifikat in einer zusätzlichen Datengruppe der Chipkarte 1100, d.h. im internen Speicher der Chipkarte 1100 aber außerhalb des Speicherbereichs der internen Identitätssignatur des ID Tokens gespeichert sind und von dort an das Terminal 1200 zur Überprüfung übertragen werden. Eine solche zusätzliche Datengruppe könnte beispielsweise als EF.PQC bezeichnet werden. In diesem Fall könnte das zugehörige externe Zertifikat entweder auch in der zusätzlichen Datengruppe der Chipkarte 1100 gespeichert werden oder, wie oben beschrieben, auf einem externen Zertifikatsserver 1300.

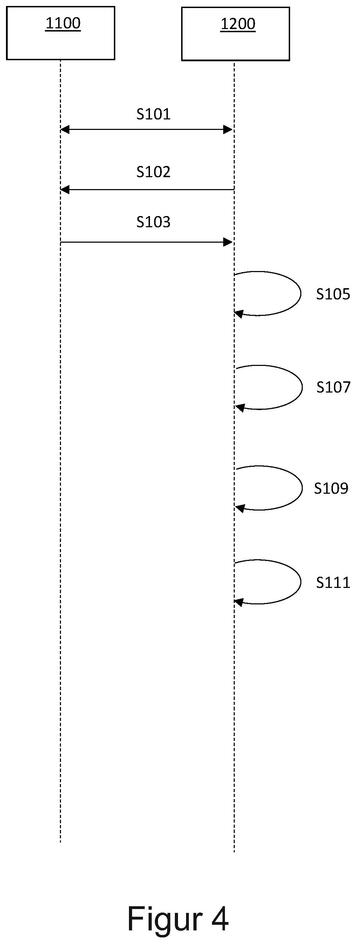

Figur 4 zeigt ein Interaktionsdiagramm zwischen der Chipkarte 1100 und dem Terminal 1200, basierend auf dem in Figur 2 gezeigten Aufbau des elektronischen Systems 1000. Zunächst wird in einem Verfahrensschritt S101 eine sichere Verbindung zwischen der Chipkarte 1100 und dem Terminal 1200 aufgebaut, unter Verwendung der bereits diskutierten Protokolle wie BAC, EAC oder PACE. Das Terminal 1200 sendet dann in Schritt S102 eine Leseanfrage an die Chipkarte 1100 um das Sicherheitsobjekt 1131 der Chipkarte 1100 auszulesen. Im Schritt S103 sendet dann die Chipkarte 1100 ihr Sicherheitsobjekt 1131 an das Terminal 1200, bzw. das Terminal 1200 empfängt das Sicherheitsobjekt 1131 von der Chipkarte 1100.

In einem nächsten Schritt S105 empfängt das Terminal 1200 eine Dokumentenkennung der Chipkarte 1100. Die Dokumentenkennung wird in diesem Ausführungsbeispiel durch das Terminal 1200 aus dem empfangenen Sicherheitsobjekt 1131 ausgelesen. Alternativ kann die Dokumentenkennung auch äußerlich auf der Chipkarte 1100 abgebildet sein und somit bildlich erfasst werden. Dies kann zu einer erhöhten Sicherheit führen, da die äußeren Merkmale der Chipkarte 1100 bei einer Manipulation der auf dem Chip der Chipkarte gespeicherten elektronischen Daten nicht verändert werden.

Das Terminal 1200 empfängt nun in Schritt S107 das externe Zertifikat 1231. In dem in Figur 4 gezeigten Ausführungsbeispiel wird das externe Zertifikat 1231 basierend auf der Dokumentenkennung aus dem internen Speicher 1230 des Terminals geladen. In einem nächsten Schritt S109 empfängt das Terminal 1200 weiterhin die externe Signatur 1232. Auch diese externe Signatur 1232 wird in dem hier gezeigten Ausführungsbeispiel aus dem internen Speicher 1230 des Terminals 1200 geladen, basierend auf der Dokumentenkennung.

Die externe Signatur 1232 wurde unter Verwendung des zu dem externen Zertifikat 1231 gehörenden privaten kryptographischen Schlüssels basierend auf einem Hash über die Originaldaten, die mit der Chipkarte 1100 assoziiert sind, gebildet. Dies ist beispielsweise bereits bei der Produktion der Chipkarte 1100 erfolgt oder zu einem späteren Zeitpunkt, zu dem eine Manipulationsfreiheit der verwendeten Originaldaten weiterhin gegeben war.

Das Terminal 1200 kann nun im finalen Schritt S111 die Authentizität der im Sicherheitsobjekt umfassten Identitätsdaten überprüft werden basierend auf der externen Signatur. Somit kann festgestellt werden, ob eine Manipulation der Identitätsdaten im Vergleich zu den Originaldaten vorliegt.

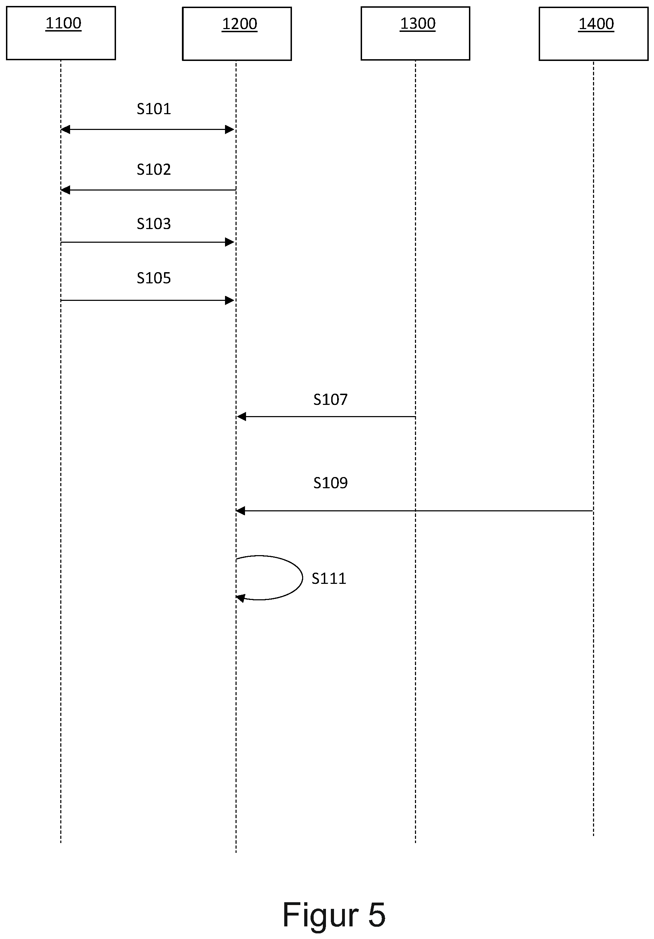

Figur 5 zeigt ein weiteres Ausführungsbeispiel des beschriebenen Verfahrens, welches eine Variante des in Figur 4 gezeigten Ausführungsbeispiels darstellt. Die Verfahrensschritte des Ausbauens S101 der sicheren Verbindung zwischen Chipkarte 1100 und Terminal 1200, sowie die Leseanfrage S102 und das Empfangen S103 der Daten des Sicherheitsobjekts 1131 der Chipkarte 1100 sind gegenüber dem in Figur 4 beschriebenen Ausführungsbeispiel nicht verändert.

In dem in Figur 5 gezeigten Ausführungsbeispiel wird in Schritt S105 die Dokumentenkennung von der Chipkarte 1100 an das Terminal 1200 übermittelt. Dies kann beispielsweise durch einen separaten Lesezugriff des Terminals 1200 auf den Speicher 1130 der Chipkarte 1100 erfolgen. Alternativ kann das Terminal die Dokumentenkennung über eine andere Art von Lesezugriff auf die Chipkarte 1100 erlangen, beispielsweise durch einen optischen Lesezugriff auf die auf der Chipkarte 1100 aufgedruckten Merkmale, die die Dokumentenkennung beispielsweise als Teil der MRZ umfassen können.

Das Terminal empfängt dann in Schritt S107 das externe Zertifikat 1331 von einem Zertifikatsserver 1300, der auch als Zertifikatseinrichtung bezeichnet werden kann, und in Schritt S109 die externe Signatur 1431 von einem Signaturserver 1400, der auch als Signaturspeichereinrichtung bezeichnet werden kann.

Das Empfangen des externen Zertifikats 1331 und/oder der externen Signatur 1431 kann basierend auf einer Anfrage des Terminals 1200 erfolgen oder es kann ein periodisches Update aller externen Zertifikate und externen Signaturen auf dem Terminal 1200 durchgeführt werden. Hierbei können der Zertifikatsserver 1300 und der Signaturserver 1400 als separate Server realisiert sein. Alternativ ist es auch möglich, dass das externe Zertifikat und die externe Signatur auf demselben Server abgelegt sind. Aus Sicherheitsgründen ist aber eine separate Speicherung von externem Zertifikat und externer Signatur zu bevorzugen.

Wenn das externe Zertifikat 1331 und auch die externe Signatur 1431 der Chipkarte 1100 im Terminal 1200 vorliegt, kann in Schritt S111 wie bereits beschrieben die Authentizität der im Speicher 1130 der Chipkarte 1100 hinterlegten Identitätsdaten unter Verwendung der PKI überprüft werden.

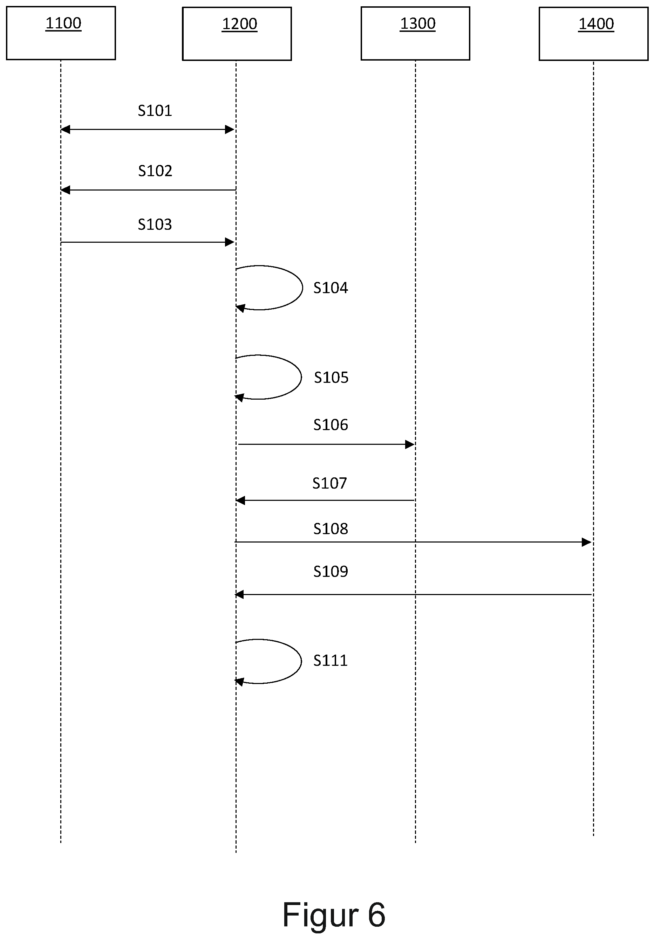

Figur 6 zeigt eine weitere Ausgestaltung des bereits mit Bezug auf Figuren 1, 4 und 5 beschriebenen Verfahrens zur Überprüfung einer externen Signatur.

Die Verfahrensschritte des Ausbauens S101 der sicheren Verbindung zwischen Chipkarte 1100 und Terminal 1200, sowie die Leseanfrage S102, das Empfangen S103 der Daten des Sicherheitsobjekts 1131 der Chipkarte 1100 und auch das Empfangen S105 der Dokumentenkennung sind gegenüber dem in Figur 4 beschriebenen Ausführungsbeispiel nicht verändert.

In dem in Figur 6 gezeigten Beispiel wird vor dem Empfangen der externen Signatur 1331 und des externen Zertifikats 1431 in einem Schritt S104 eine Abfrage durchgeführt, ob für die Chipkarte 1100 eine externe Signatur vorliegt. Diese Abfrage S104 kann vor oder nach dem Empfangen S105 der Dokumentenkennung erfolgen. Die Abfrage S104 kann verschiedene Unterschritte umfassen. Beispielsweise kann innerhalb der Abfrage S104 überprüft werden, ob das in Schritt S103 empfangene Sicherheitsobjekt 1131 der Chipkarte 1100 bereits über Post-Quanten-Kryptographie verfügt. Wenn das Sicherheitsobjekt 1131 bereits eine Post-Quanten-Signatur umfasst, so muss keine zusätzliche externe Signatur überprüft werden, da die interne Signatur in diesem Fall bereits als manipulationsfrei angenommen werden würde.

Alternativ oder zusätzlich könnte in Schritt S104 überprüft werden, ob eine externe Signatur für die Chipkarte 1100 vorliegt, beispielsweise durch Abfrage einer Fehlerliste oder einer Speicherinformation. Die Fehlerliste und/oder Speicherinformation können basierend auf einer Dokumentenkennung oder basierend auf einem internen Zertifikat der Chipkarte 1100 angeben, ob und wenn ja wo, eine externe Signatur und ein zugehöriges externes Zertifikat abgelegt sind. Die Überprüfung, ob bereits eine quantensichere Signatur in der Chipkarte vorliegt kann optional auch bei den anderen beschriebenen Ausführungsbeispielen ergänzt werden.

Die Fehlerliste kann als Defect List oder Deviation List, wie bereits beschrieben, realisiert sein und die Speicherinformation kann beispielsweise als Master List, wie bereits beschrieben, realisiert sein.

Nachdem das Vorhandensein einer externen Signatur in Schritt S104 bestätigt wurde und in Schritt S105 die Dokumentenkennung der Chipkarte 1100 empfangen, ausgelesen oder rekonstruiert wurde, sendet das Terminal 1200 in Schritt S106 eine Anfrage an den Zertifikatsserver 1300. Die in Schritt S106 gesendete Anfrage kann hierbei beispielsweise das interne Zertifikat der Chipkarte 1100 umfassen, da das interne Zertifikat als Referenz für das neue, externe Zertifikat für die Chipkarte verwendet werden kann. Alternativ kann die Anfrage S106 auch basierend auf der Dokumentenkennung der Chipkarte 1100 durchgeführt werden. Basierend auf der Anfrage S106 übermittelt dann der Zertifikatsserver 1300 das externe Zertifikat 1331 an das Terminal 1200. Anders formuliert, wird das externe Zertifikat 1331 vom Terminal 1200 empfangen.

Außerdem sendet in Schritt S108 das Terminal eine Anfrage an den Signaturserver 1400. Diese Anfrage enthält die Dokumentenkennung, basierend auf dieser der Signaturserver 1400 dann die zugeordnete externe Signatur 1431 in Schritt S109 an das Terminal übermittelt. Die Anfragen an den Zertifikatsserver 1300 und Signaturserver 1400 können hierbei in jeder beliebigen Reihenfolge erfolgen.

Die Anfragen in Schritt S106 und S108 können wahlweise synchron oder asynchron durchgeführt werden.

Sobald dem Terminal die Identitätsdaten der Chipkarte 1100, die externe Signatur 1431 und das externe Zertifikat 1331 vorliegen, kann in Schritt S111 die Authentizität der Identitätsdaten verifiziert werden, wie bereits beschrieben.

Figur 7 zeigt eine Ausgestaltung eines Verfahrens zum Hinzufügen einer externen Signatur "im Feld", d.h. nach der Produktion und Ausgabe der Chipkarte 1100 an einen Benutzer. Alternativ zu der in Figur 7 gezeigten Ausgestaltung ist auch ein Hinzufügen einer externen Signatur bereits während der Produktion der Chipkarte 1100 möglich. Weiterhin ist auch ein Hinzufügen einer externen Signatur nach der Ausgabe der Chipkarte 1100 basierend auf bei der Produktion gespeicherten Daten möglich. Hierzu wäre keine sichere Verbindung des Terminals 1200 zu der Chipkarte 1100 notwendig.

In der im Weiteren beschriebenen Ausgestaltung des Hinzufügens der externen Signatur zur Chipkarte 1100, wird die externe Signatur basierend auf den in der Chipkarte gespeicherten Identitätsdaten generiert. Dies wäre "im Feld" möglich, beispielsweise in dem der Benutzer der Chipkarte 1100 seine Chipkarte auf ein dafür vorgesehenes Terminal in einer Behörde auflegt oder, alternativ, unter Benutzung eines sicheren Onlinediensts möglich.

In diesem Verfahren wird zunächst in Schritt S701 eine sichere Verbindung zwischen der Chipkarte 1100 und dem Terminal 1200 aufgebaut. Diese sichere Verbindung kann, wie oben beschrieben, basierend auf bekannten Protokollen erfolgen.

Nach dem Aufbau der sicheren Verbindung 1001 erfolgt in Schritt S702 eine Leseanfrage des Terminals 1200 an die Chipkarte 1100 und in Schritt S703 wird ein Sicherheitsobjekt 1131 der Chipkarte 1100 an das Terminal 1200 übertragen.

Nach dem Empfangen S703 des Sicherheitsobjekts 1131 der Chipkarte 1100 wird in Schritt S704 zunächst die Authentizität der im Sicherheitsobjekt 1131 enthaltenen Identitätsdaten anhand der ebenfalls im Sicherheitsobjekt 1131 enthaltenen internen Signatur und des internen Zertifikats unter Verwendung der PKI überprüft. Somit wird sichergestellt, dass die Identitätsdaten der Chipkarte 1100 nicht bereits manipuliert wurden. Hierbei ist wichtig, dass zum Zeitpunkt, zu dem diese Schritte durchgeführt werden, das interne Zertifikat und das zugrunde liegenden kryptographische Verfahren als sicher gelten.

Wenn die Überprüfung der Authentizität der Identitätsdaten in Schritt S704 erfolgreich war, dann kann in Schritt S705 die Dokumentenkennung der Chipkarte 1100 durch das Terminal 1100 empfangen werden. Hierbei ist ein Auslesen der Dokumentenkennung aus dem Speicher 1130 der Chipkarte 1100 möglich, ein Rekonstruieren der Dokumentenkennung aus den bereits empfangenen Daten des Sicherheitsobjekts 1131 oder ein Ablesen der Dokumentenkennung von äußeren, sichtbaren Merkmalen der Chipkarte 1100.

In einem weiteren Schritt S706 kann anhand der Dokumentenkennung und/oder des internen Zertifikats der Chipkarte 1100 überprüft werden, ob eine externe Signatur für die Chipkarte 1100 erstellt werden muss. Hierbei kann beispielsweise abgefragt werden, ob für die Chipkarte 1100 mit dieser Dokumentenkennung bereits eine externe Signatur vorliegt. Auch kann geprüft werden, welches kryptographische Verfahren für das interne Zertifikat und die interne Signatur verwendet wurde. Basierend auf dem verwendeten kryptographischen Verfahren kann eine externe Signatur notwendig sein oder nicht. Insbesondere wird eine externe Signatur für notwendig erachtet, wenn das kryptographische Verfahren der internen Signatur nicht quantensicher ist, beispielsweise wenn das kryptographische Verfahren der internen Signatur auf RSA oder ECC basiert.

Wenn eine externe Signatur zu erstellen ist, so werden in Schritt S707 die Identitätsdaten und Dokumentenkennung an einen Zertifikatsserver 1300 übertragen. Dieser Zertifikatsserver verfügt über einen privaten PQC-Schlüssel mit dem in Schritt S708 die externe Signatur erstellt wird. In Schritt S709 wird dann das zum privaten PQC-Schlüssel gehörende öffentliche Zertifikat zusammen mit der Dokumentenkennung oder dem internen Zertifikat auf dem Zertifikatsserver abgespeichert.

Der private PQC Schlüssel ist hierbei beispielsweise ein basierend auf den folgenden asymmetrischen kryptographischen Verfahren generierter Schlüssel sein: gitterbasierte Kryptographie, Hash-basierte Kryptographie, multivariate Polynome, fehlerkorrigierende Codes und/oder supersinguläre elliptische Kurven.

Hinterher werden in Schritt S710 die erstellte externen Signatur und Dokumentenkennung an den Signaturserver übertragen, der diese empfangene Signaturinformation dann in Schritt S711 abspeichert.

In einer alternativen Ausgestaltung ist es auch möglich, dass die erstellte externe Signatur statt an den Signaturserver 1400 an die Chipkarte 1100 übertragen und dort abgespeichert werden, beispielsweise in einem zusätzlichen Sicherheitsobjekt EF. PQC.

Es wird weiterhin angemerkt, dass eine Kombination der gezeigten Ausführungsformen möglich ist, so dass weitere, von dieser Anmeldung umfasste Ausführungsformen entstehen können.

### Bezugszeichenliste

- 1000: Elektronisches System
- 1100: ID Token
- 1110: Prozessor
- 1120: Kommunikationsschnittstelle
- 1130: Speicher
- 1131: Sicherheitsobjekt
- 1200: Terminal
- 1210: Prozessor
- 1220: Kommunikationsschnittstelle
- 1230: Speicher
- 1231: externes Zertifikat
- 1232: externe Signatur
- 1300: Zertifikatsserver
- 1310: Prozessor
- 1320: Kommunikationsschnittstelle
- 1330: Speicher
- 1331: externes Zertifikat
- 1400: Signaturserver
- 1410: Prozessor
- 1420: Kommunikationsschnittstelle
- 1430: Speicher
- 1431: externes Zertifikat
- 2000: Elektronisches System

- S101: Aufbauen einer sicheren Verbindung zum ID Token
- S102: Senden einer Leseanfrage an das ID Token
- S103: Empfangen von Identitätsdaten des ID Token
- S104: Überprüfen ob externe Signatur vorliegt
- S105: Empfangen der Dokumentenkennung des ID Tokens
- S106: Anfrage für externes Zertifikat
- S107: Empfangen des externen Zertifikats
- S108: Anfrage für externe Signatur
- S109: Empfangen der externen Signatur
- S111: Überprüfen der Authentizität der Identitätsdaten
- S701: Aufbauen einer sicheren Verbindung zum ID Token
- S702: Senden einer Leseanfrage an das ID Token
- S703: Empfangen von Identitätsdaten des ID Token
- S704: Überprüfen der Authentizität der Identitätsdaten mit interner Signatur
- S705: Empfangen der Dokumentenkennung
- S706: Überprüfen ob externe Signatur benötigt wird
- S707: Übertragen der Identitätsdaten und Dokumentenkennung
- S708: Erstellen der externen Signatur
- S709: Speichern der Zertifikatsinformation
- S710: Übertragen der externen Signatur und Dokumentenkennung
- S711: Speichern der Signaturinformation

## Patentansprüche

1. Verfahren zur Authentizitätsüberprüfung, umfassend die folgenden Schritte:
- Aufbauen (S101) einer sicheren Verbindung zu einem ID Token (1100);
- Auslesen (S102, S103) von gespeicherten Identitätsdaten aus dem ID Token (1100);
- Erhalten (S105) einer Dokumentenkennung des ID Tokens (1100);
- Empfangen (S107) eines dem ID Token (1100) zugeordneten externen Zertifikats (1231, 1331);
- Empfangen (S109) einer externen Identitätssignatur (1232, 1431) basierend auf der Dokumentenkennung, wobei die externe Identitätssignatur (1232, 1431) eine unter Verwendung eines dem externen Zertifikat (1231, 1331) zugeordneten geheimen Schlüssels erstellte kryptographische Signatur von authentischen Identitätsdaten des ID Tokens (1100) ist; und
- Überprüfen (S111) der Authentizität der gespeicherten Identitätsdaten des ID Tokens (1100) basierend auf der externen Identitätssignatur (1232, 1431) und dem externen Zertifikat (1231, 1331).

2. Verfahren gemäß einem der vorhergehenden Ansprüche, wobei das Erhalten (S105) der Dokumentenkennung umfasst:
∘ Auslesen der Dokumentenkennung aus dem ID Token (1100), oder
∘ Ableiten der Dokumentenkennung basierend auf den ausgelesenen Identitätsdaten und/oder basierend auf aufgedruckten Daten des ID Tokens (1100).

3. Verfahren gemäß einem der vorhergehenden Ansprüche, wobei das Empfangen (S107) des externen Zertifikats die folgenden Schritte umfasst:
- Übermitteln (S106) der Dokumentenkennung und/oder eines aus dem ID Token (1100) ausgelesenen internen Zertifikats an eine Zertifikatseinrichtung (1300);
- Empfangen (S107) des externen Zertifikats (1331) von der Zertifikatseinrichtung (1300) basierend auf der übermittelten Dokumentenkennung bzw. des übermittelten internen Zertifikats.

4. Verfahren gemäß einem der vorhergehenden Ansprüche, wobei das Empfangen (S109) der externen Identitätssignatur basierend auf der Dokumentenkennung die folgenden Schritte umfasst:
- Übermitteln (S108) der Dokumentenkennung an eine Signaturspeichereinrichtung (1400);
- Empfangen (S109) der externen Identitätssignatur (1431) von der Signaturspeichereinrichtung (1400).

5. Verfahren gemäß einem der vorhergehenden Ansprüche, wobei das Auslesen (S103) der gespeicherten Identitätsdaten umfasst: Auslesen eines Sicherheitsobjekts des ID Token (1100), wobei das Sicherheitsobjekt die gespeicherten Identitätsdaten, eine interne Identitätssignatur der Identitätsdaten und/oder ein dazugehöriges internes Zertifikat umfasst.

6. Verfahren gemäß Anspruch 5, wobei sich die interne Identitätssignatur von der externen Identitätssignatur (1232, 1431) unterscheidet;
und/oder wobei das externe Zertifikat ein Post-Quanten-Zertifikat ist.

7. Verfahren gemäß einem der vorhergehenden Ansprüche, wobei das Empfangen (S109) der externen Identitätssignatur umfasst: Empfangen eines externen Sicherheitsobjekts, welches externe Identitätsdaten sowie die externe Identitätssignatur umfasst.

8. Verfahren gemäß einem der vorhergehenden Ansprüche, das Verfahren weiterhin umfassend:
- Auslesen einer Zertifikatsspeicherinformation;
- Aufbauen der Verbindung zu der Zertifikatseinrichtung (1300) basierend auf der Zertifikatsspeicherinformation.

9. Verfahren gemäß Anspruch 8, wobei die Zertifikatsspeicherinformation aus dem ID Token (1100) ausgelesen wird.

10. Verfahren gemäß einem der vorhergehenden Ansprüche, weiterhin umfassend vor dem Empfangen des externen Zertifikats (1231, 1331) und vor dem Empfangen der externen Identitätssignatur (1232, 1431):
- Abgleichen der Dokumentenkennung, der gespeicherten Identitätsdaten oder eines aus dem ID Token (1100) ausgelesenen internen Zertifikats mit einer Informationsliste;
- Empfangen von Informationen der externen Fehlerliste, wobei aus den Informationen hervorgeht, dass für das ID Token (1100) eine externe Identitätssignatur vorliegt.

11. Verfahren gemäß einem der vorhergehenden Ansprüche, wobei das externe Zertifikat mit einem kryptographischen Verfahren erstellt wurde, welches sich von kryptographischen Verfahren, mit denen die bisher für das digitale Token verwendeten Zertifikate erstellt wurden, unterscheidet.

12. Verfahren zur Erstellung einer externen Identitätssignatur, das Verfahren umfassend die folgenden Schritte:
- Erhalten eines privaten externen Schlüssels und eines dem privaten externen Schlüssel zugeordneten externen Zertifikats;
- Aufbauen (S701) einer ersten sicheren Verbindung zum ID Token;
- Auslesen (S703) von Identitätsdaten aus dem ID Token;
- Überprüfen (S704) der Authentizität der Identitätsdaten anhand einer im ID Token gespeicherten internen Identitätssignatur; und
- Erstellen (S708) der externen Identitätssignatur basierend auf den Identitätsdaten unter Verwendung des privaten externen Schlüssels.

13. Vorrichtung (1200) zur Authentizitätsüberprüfung, umfassend einen Speicher (1230), eine Kommunikationsschnittstelle (1220) und einen Prozessor (1210) der konfiguriert ist die folgenden Schritte auszuführen:
- Aufbauen (S101), unter Verwendung der Kommunikationsschnittstelle (1220), einer sicheren Verbindung zu einem ID Token (1100);
- Auslesen (S103) von gespeicherten Identitätsdaten aus dem ID Token (1100);
- Erhalten (S105) einer Dokumentenkennung des ID Tokens (1100);
- Empfangen (S107) eines dem ID Token (1100) zugeordneten externen Zertifikats (1231, 1331);
- Empfangen (S109) einer externen Identitätssignatur (1232) basierend auf der Dokumentenkennung, wobei die externe Identitätssignatur (1232, 1431) eine unter Verwendung des dem externen Zertifikat (1231, 1331) zugeordneten geheimen Schlüssels erstellte kryptographische Signatur von authentischen Identitätsdaten des ID Tokens (1100) ist; und
- Überprüfen (S111) der Authentizität der gespeicherten Identitätsdaten des ID Tokens (1100) basierend auf der externen Identitätssignatur (1232, 1431) und dem externen Zertifikat (1231, 1331).

14. Vorrichtung gemäß Anspruch 13, wobei der Prozessor (1210) weiterhin konfiguriert ist zur Durchführung der Verfahren gemäß einem der Ansprüche 2 - 11.

15. System (1000, 2000) zur Authentitzitätsüberprüfung umfassend eine Authentifizierungsvorrichtung (1200) gemäß Anspruch 13 oder 14 und weiterhin umfassend eine Zertifikatseinrichtung (1300) und/oder eine Signaturspeichereinrichtung (1400), wobei
- die Zertifikatseinrichtung (1300) konfiguriert ist zum Übermitteln des dem ID Token (1100) zugeordneten externen Zertifikats (1331) an die Authentifizierungsvorrichtung (1200); und/oder
- die Signaturspeichereinrichtung (1400) konfiguriert ist zum Übermitteln der externen Identitätssignatur (1431) an die Authentifizierungsvorrichtung.
